# EUROPEAN PATENT APPLICATION

(11) **EP 3 902 222 A1**
(43) Date of publication of application: **27.10.2021**
(21) Application number: 19902032.2
(22) Date of filing: 16.01.2019
(51) Int. Cl.: H04L 29/06, H04L 12/26

(54) **DR MODE PROTECTION METHOD AND DEVICE**

(30) Priority: 27.12.2018 CN 201811612909
(71) Applicant: Wangsu Science & Technology Co., Ltd., Shanghai 200030 (CN)
(72) Inventor: YANG, Guang, Shanghai 200030 (CN); MA, Tao, Shanghai 200030 (CN)
(74) Representative: De Arpe Tejero, Manuel
(86) International application number: PCT/CN2019/071876
(87) International publication number: WO 2020/133603

(57) **Abstract**

The present disclosure discloses a method and a protection device under a direct routing mode, belonging to a field of network security. The method includes: when receiving a data packet of a target request, determining a packet type of the data packet; if the packet type is SYN packet, returning an SYN_ACK packet carrying a target SEQ value; if the packet type is ACK packet, determining whether the ACK packet is legitimate based on the target SEQ value; if the ACK packet is legitimate, marking a preset field in a subsequent PUSH_ACK packet and forwarding the PUSH_ACK packet to a service server, to make the service server process the target request based on the PUSH_ACK packet with the marked preset field. By adopting the present disclosure, a protection quality of a load-balancing device under the direct routing mode may be improved.

## Description

### FIELD OF THE DISCLOSURE

The present disclosure generally relates to the field of network security technology and, more particularly, relates to a protection method and a protection device under a direct routing mode.

### BACKGROUND

With explosive growth of network access requests, a content delivery network (CDN) system is facing a large distribution pressure. The CDN system may distribute these massive network access requests to service servers for processing the network access requests in a balanced manner through a load-balancing device.

A load-balancing device in the prior arts usually is deployed with a Linux Virtual Server (LVS) service. The LVS service may modify an access address of each network access request to an IP address of the LVS, and then distribute the massive network access requests received by the LVS to the service servers in a balanced manner according to a loading status of each service server. The load-balancing device usually adopts a direct routing (DR) distribution mode. In the DR mode, by modifying a media access control (MAC) address in a request packet of each network access request to a routing MAC address of a machine room where the service servers are located, the load-balancing device directly distributes the request packet to a routing device in the machine room where the service servers are located, and then the routing device transmits the request packet to a corresponding service server for processing. Besides, since the load-balancing device in the DR distribution mode does not have the ability to prevent SYN FLOOD attacks, the load-balancing device may be combined with a protection device or a built-in protection module for protection. The protection device or the built-in protection module may use mechanisms including discard/retransmission of a first packet or erroneous sequence number packet to protect against SYN FLOOD attacks.

When realizing the present disclosure, inventors found that the existing technology have at least following problems.

The mechanisms including the discard/retransmission of a first packet or packets with erroneous sequence number may induce problems including a delay of the first packet or prone to false protection. Custom experience may be poor. Therefore, the load-balancing device in the existing DR distribution mode has a poor protection quality.

### BRIEF SUMMARY OF THE DISCLOSURE

For solving the above technical problems, embodiments of the present disclosure provide a method and a protection device in the DR mode. The technical solutions may include the following.

A first aspect of the present disclosure provides a protection method under the direct routing mode. The method includes:
when receiving a data packet of a target request, determining a packet type of the data packet;
if the packet type is an SYN packet, returning an SYN_ACK packet carrying a target SEQ value;
if the packet type is an ACK packet, determining whether the ACK packet is legitimate based on the target SEQ value;
if the ACK packet is legitimate, marking a preset field in a subsequent PUSH_ACK packet and forwarding the PUSH_ACK packet to a service server, such that the service server processes the target request based on the PUSH_ACK packet with the marked preset field.

Further, if the packet type is the SYN packet, returning the SYN_ACK packet carrying the target SEQ value includes:
if the packet type is the SYN packet, encrypting packet content of the SYN packet to generate the target SEQ value, and returning the SYN_ACK packet carrying the target SEQ value, where the packet content of the SYN packet at least includes quaternary information and content of a TCP_OPTION option.

Further, if the packet type is the ACK packet, determining whether the ACK packet is legitimate based on the target SEQ value includes:
if the packet type is the ACK packet, encrypting packet content of the ACK packet to generate a target ACK value and determining whether an ACK value in the ACK packet, the target ACK value, and the target SEQ value are consistent, where the packet content of the ACK packet at least includes quaternary information; and
if the ACK value in the ACK packet, the target ACK value, and the target SEQ value are consistent, determining the ACK packet is illegitimate; otherwise, determining the ACK packet is illegitimate.

Further, determining whether the ACK value in the ACK packet, the target ACK value, and the target SEQ value are consistent includes:
if the ACK value in the ACK packet is same as the target SEQ value plus one and the target SEQ value is consistent with the target ACK value, determining that the ACK value, the target ACK value, and target SEQ value in the ACK packet are consistent; otherwise, determining that the ACK value, the target ACK value, and target SEQ value in the ACK packet are inconsistent.

Further, marking the preset field in the subsequent PUSH_ACK packet includes:
if the protocol type of the PUSH_ACK packet is ipv4, marking an ipv4 preset field in the PUSH_ACK packet; and
if the protocol type of the PUSH_ACK packet is ipv6, marking an ipv6 preset field in the PUSH_ACK packet.

A second aspect of the present disclosure provides a protection method under a direct routing mode. The method includes:
receiving a PUSH_ACK packet with a marked preset field;
extracting an ACK value in the PUSH_ACK packet with the marked preset field and acquiring a target SEQ value based on the extracted ACK value; and
decrypting the target SEQ value to obtain a content of a TCP_OPTION option and processing a target request to which the PUSH_ACK packet with the marked preset field belongs based on the content of the TCP_OPTION option.

Further, processing the target request to which the PUSH_ACK packet with the marked preset field belongs based on the content of the TCP_OPTION option includes:
if a connection of the target request is established, updating connection entry of the target request based on the content of the TCP_OPTION option and processing the target request based on the updated connection entry; and
if the connection of the target request is not established, creating a connection entry based on the content of the TCP_OPTION option and processing the target request based on the created connection entry.

A third aspect of the present disclosure provides a protection device under a direct routing mode. The device includes:
a first determination module, configured to determine a type of a data packet when receiving the data packet of a target request;
a returning module, configured to return an SYN_ACK packet carrying a target SEQ value if the packet type is an SYN packet;
a second determination module, configured to if the packet type is an ACK packet, determine whether the ACK packet is legitimate; and
a marking and forwarding module, configured to mark a preset field in a subsequent PUSH_ACK packet if the ACK packet is legitimate, and forward the PUSH_ACK packet to service servers such that the service servers processes the target request based on the PUSH_ACK packet with the marked preset field.

Further, the returning module is specifically configured to:
if the packet type is an SYN packet, encrypt a packet content of the SYN packet to generate a target SEQ value, and to return the SYN_ACK packet carrying the target SEQ value, where the packet content of the SYN packet includes at least quaternary information and content of a TCP_OPTION option.

Further, the second determination module is configured to:
if the packet type is an ACK packet, encrypt the packet content of the ACK packet to generate a target ACK value and determine whether the ACK value in the ACK packet, the target ACK value, and the target SEQ value are consistent, where the packet content of the ACK packet at least includes quaternary information, where:
if the ACK value in the ACK packet, the target ACK value, and the target SEQ value are consistent, the ACK packet is determined is illegitimate; and
if the ACK value in the ACK packet, the target ACK value, and the target SEQ value are inconsistent, the ACK packet is determined is illegitimate.

Further, the second determination module is also configured to:
if the ACK value in the ACK packet is same as the target SEQ value plus one and the target SEQ value is consistent with the target ACK value, determine that the ACK value, the target ACK value, and target SEQ value in the ACK packet are consistent; otherwise, determine that the ACK value, the target ACK value, and target SEQ value in the ACK packet are inconsistent.

Further, the marking and forwarding module is configured to:
if a protocol type of the PUSH_ACK packet is ipv4, mark an ipv4 preset field in the PUSH_ACK packet; and
if a protocol type of the PUSH_ACK packet is ipv6, mark an ipv6 preset field in the PUSH_ACK packet.

A fourth aspect of the present disclosure provides a service server. The service server includes:
a receiving module, configured to receive a PUSH_ACK packet with marked preset field forwarded by the protection device;
an extraction module, configured to extract the ACK value in the PUSH_ACK packet with the marked preset field and then get the target SEQ value according to the extracted ACK value; and
a processing module, configured to decrypt the target SEQ value to obtain the content of the TCP_OPTION option, and process the target request including the PUSH_ACK packet with the marked preset field based on the content of the TCP_OPTION option.

Further, the processing module is configured to:
if a connection of the target request is established, update a connection entry of the target request based on the content of the TCP_OPTION option and process the target request based on the updated connection entry; and
if the connection of the target request is not established, create a connection entry based on the content of the TCP_OPTION option and process the target request based on the created connection entry.

A fifth aspect of the present disclosure provides a load-balancing device. The load-balancing device includes a processor and a memory. The memory is configured to store at least one instruction, at least one program, a set of codes, or a set of instructions. And the at least one instruction, the at least one program, the set of codes, or the set of instructions is configured to be loaded and executed by the processor, to implement a protection method under a direct routing mode according to the first aspect of the present disclosure.

A sixth aspect of the present disclosure provides a computer-readable storage medium, configured to store at least one instruction, at least one program, a set of codes, or a set of instructions. The at least one instruction, the at least one program, the set of codes, or the set of instructions is configured to be loaded and executed by a processor, to implement a protection method under a direct routing mode according to the first aspect of the present disclosure.

The various embodiments of the present disclosure include the following beneficial effects.

In the present disclosure, when receiving the data packet of the target request, the packet type of the data packet may be determined. If the packet type is an SYN packet, the SYN_ACK packet carrying the target SEQ value may be replied. If the packet type is an ACK message, whether the ACK message is legitimate may be determined based on the target SEQ value. If the ACK message is legitimate, the preset fields in a subsequent PUSH_ACK message may be marked, and the PUSH_ACK may be forwarded to a service server, to make the service server process the target request based on the PUSH_ACK message with the marked preset fields. In this way, in the DR working mode, when the load-balancing device receives the SYN message, forwarding the potentially aggressive SYN message directly to the back-end service server may be avoided by returning the SYN_ACK message carrying the target SEQ value. The problem of the large consumption of business server resources may be alleviated. When the load-balancing device receives an illegitimate ACK packet, it may discard it to protect against the SYN FLOOD attacks, and the protection quality may be high. When the load-balancing device receives a legitimate ACK message, it may continue the process for establishing the TCP connection with a low delay. The problems including the first packet delay or the prone to false protection caused by discard/retransmission of the first packet or the erroneous sequence number message may be avoided effectively. The customer experience and the service quality of the load-balancing equipment may be improved effectively. In addition, with the protection method provided by the embodiments of the present disclosure, no additional protection equipment may be needed, and the implementation cost may be reduced.

### BRIEF DESCRIPTION OF THE DRAWINGS

To more clearly illustrate the technical solutions of the present disclosure, the accompanying drawings to be used in the description of the disclosed embodiments are briefly described hereinafter. It is obvious that the drawings in the following description are certain embodiments of the present disclosure, and other drawings may be obtained by a person of ordinary skill in the art in view of the drawings provided without creative efforts.
FIG. 1 illustrates a schematic diagram of a network framework according to an embodiment of the present disclosure;
FIG. 2 illustrates a schematic diagram of a protection method under a direct routing mode according to an embodiment of the present disclosure;
FIG. 3 illustrates a structural diagram of a protection device under a direct routing mode according to an embodiment of the present disclosure; and
FIG. 4 illustrates a structural diagram of a service server according to an embodiment of the present disclosure; and
FIG. 5 illustrates a structural diagram of a load-balancing device according to an embodiment of the present disclosure.

### DETAILED DESCRIPTION

To more clearly describe the targets, technical solutions and advantages of the present disclosure, the present disclosure is further illustrated in detail with reference to the accompanying drawings in conjunction with embodiments.

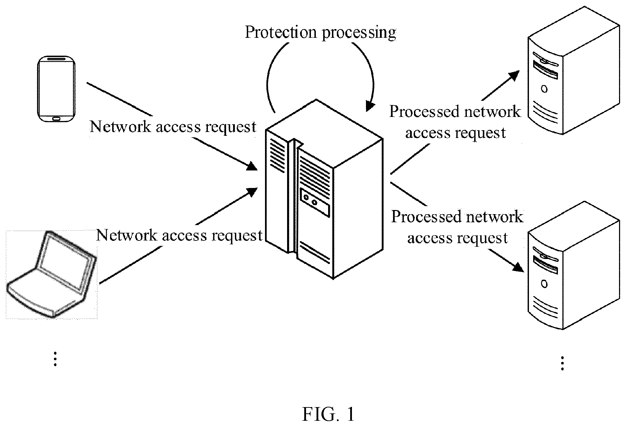

The present disclosure provides a protection method in a DR mode. The execution subject of the method may be a load-balancing device in a CDN system. The load-balancing device may receive network access requests from massive client terminals for various resources, including access request for webpage resources or access requests for video resources. The load-balancing device may also use a distribution logic of the DR mode to distribute the massive network access requests to each service server in a balanced manner for processing, based on a load status of each service server in the CDN system. That is, a MAC address in a request packet of each network access request may be firstly modified to a routing MAC address of a machine room where the service servers are located, the load-balancing device may directly distribute the request packets to a routing device in the machine room where the service servers are located, and finally the routing device may transmit each of the request packets to a corresponding service server for processing. The service server may directly return the response to a corresponding client terminal. Besides, the load-balancing device may protect against SYN FLOOD attack requests in the DR mode. A corresponding network scenario is shown in FIG. 1. The device may include a processor, a memory, and a transceiver. The processor may be configured to perform a process for protection under the DR mode in the following process. The memory may be configured to store data required during the processing and the data generated during the processing. The transceiver may be configured to receive and transmit relevant data during processing.

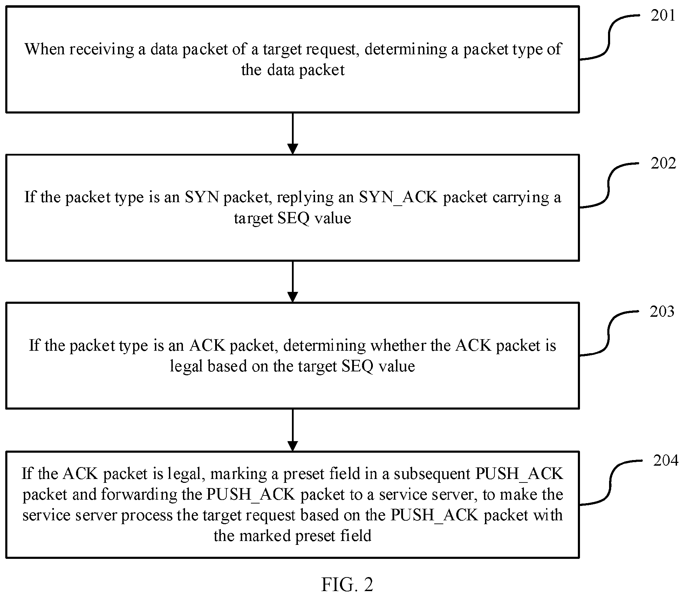

A processing flow of a protection method in the DR mode illustrated in FIG. 2 will be described in detail, combined with various embodiments in the following. The method may include following steps:
Step 201: when receiving a data packet of a target request, determining a packet type of the data packet.

In one embodiment, SYN FLOOD attack may be an attack method that uses a three-way handshake rule of a transmission control protocol (TCP) to send a large number of fake TCP connection requests to an attacked party, causing the attacked servers to generate a large number of semi-connections and to fail in responding to normal connection requests. Correspondingly, the attacked server may exhaust its resources (such as a full CPU load or insufficient memory). To protect against the SYN FLOOD attacks, when the load-balancing device receives an arbitrary network access request (that is, a target request), the load-balancing device may determine the packet type of the data packet in the target request, and then process according to the determining result. Specifically, a data packet of a TCP connection request may be divided into an SYN packet and an ACK packet. An SYN packet may be a data packet where an SYN flag bit is set to 1 and an ACK flag bit is set to 0 in the TCP data packet, and represent a request to establish a TCP connection. An ACK packet may be a data packet where an SYN flag bit is set to 0 and an ACK flag bit is set to 1 in the TCP data packet, and represent confirmation of establishing the TCP connection. Correspondingly, the load-balancing device may determine the packet type based on a status of each flag bit in the data packet.

Step 202: if the packet type of the data packet is an SYN packet, returning an SYN_ACK packet carrying a target SEQ value.

In one embodiment, if the SYN flag bit is set to 1 and the ACK flag bit is set to 0 in the data packet of the target request, the load-balancing device may determine the packet type of the data packet is an SYN packet. Correspondingly, based on the three-handshake rule for establishing TCP connection, the load-balancing device may simulate the service server to return the corresponding SYN_ACK packet to the client that initiates the target request using a proxy method. Content of a sequence number (SEQ) field in the SYN_ACK packet may be a value formed by specially processing the packet content of the SYN packet. For example, the content of the sequence number (SEQ) field in the SYN_ACK packet may be a value formed by encrypting the quaternary information in the SYN packet and content of a TCP_OPTION option necessary to establish the TCP connection. Specifically, the quaternary information and the content of the TCP_OPTION option may be mapped to a short length-fixed binary value through a hashing process. The target SEQ target value may mark the target request based on the quaternary information in the SYN packet, to determine whether the subsequent packet of the target request is legitimate (that is, has quaternary information same as the SYN packet). In the meantime, the content of the TCP_OPTION option may be saved through the target SEQ value, which is convenient for the subsequent protection process. A problem that the content of the TCP_OPTION option of the SYN_ACK packet cannot be cached because the proxy returns the SYN_ACK packet may be resolved. The problem that the content of the TCP_OPTION option of the SYN_ACK packet cannot be cached may be due to that the content of the TCP_OPTION option is saved in the ACK packet and the load-balancing device cannot cache all ACK packets in all ACK packets. By a process returning the SYN_ACK packet carrying the target SEQ value, a problem of consuming massive resources of the service servers after forwarding potential attack-type SYN packet to the service servers in the back end may be avoided. Also, the related establishment steps for establishing the TCP connection may be continued, to avoid problems including first packet delay and false protection induced by discard/retransmission of the first packet or erroneous sequence number packet.

Optionally, Step 202 may include: if the packet type is an SYN packet, encrypting the packet content of the SYN packet to generate a target SEQ value, and returning the SYN_ACK packet carrying the target SEQ value.

In one embodiment, the load-balancing device may generate the target SEQ value by encrypting the packet content of the SYN packet respectively. The packet content of the SYN packet may at least include quaternary information and content of a TCP_OPTION option content. Specifically, the quaternary information may include a source IP address, a source terminal port number, a target IP address, and a target terminal port number. The content of the TCP_OPTION option may include a window expansion option, a time stamp option, etc. Specifically, the load-balancing device may first encrypt the quaternary information in the SYN packet to obtain a first encrypted value, and the first encrypted value may be used to determine whether a subsequent ACK packet is legitimate. After that, the content of the TCP_OPTION option may be encrypted to obtain a second encrypted value which can be used to save the content of the TCP_OPTION option. After that, the first encrypted value and the second encrypted value may be combined according to a preset rule to obtain the target SEQ value. Or the second encrypted value may be directly added to the first encrypted value to get a longer character. For example, assuming that the first encrypted value is an 8-bit binary value of 11110000, and the second encrypted value is another 8-bit binary value of 11001100, the target SEQ value may be 1111000011001100.

Step 203: if the packet type of the data packet is an ACK packet, determining whether the ACK packet is legitimate according to the target SEQ value.

In one embodiment, if the SYN flag bit is set to 0 and the ACK flag bit is set to 1 in the data packet of the target request, the load-balancing device may determine the packet type of the data packet is an ACK packet. Correspondingly, the load-balancing device may determine the legitimacy of the ACK packet based on the target SEQ value. Specifically, based on the three-way handshake rule for establishing a TCP connection, when the client generates a legitimate ACK packet, the client may use a value of the SEQ field in the SYN_ACK packet (that is, the above target SEQ value) added by one as the ACK (acknowledge number) value in the ACK packet. In this way, when the load-balancing device receives the returned ACK packet, it can determine the legitimacy of the returned ACK packet based on the target SEQ value, that is, determine whether it is a normal ACK packet.

Optionally, Step 203 may include: if the packet type is an ACK packet, encrypting the packet content of the ACK packet to generate a target ACK value and determining whether the ACK value in the ACK packet, the target ACK value, and the target SEQ value are consistent. If the ACK value in the ACK packet, the target ACK value and the target SEQ value are consistent, the ACK packet may be determined is illegitimate. If the ACK value in the ACK packet, the target ACK value and the target SEQ value are inconsistent, the ACK packet may be determined to be an illegitimate packet.

In one embodiment, only if the quaternary information of the ACK packet and the quaternary information of the SYN packet are the same and the ACK value of the ACK packet is same as the SEQ value of the SYN_ACK packet (that is, the target SEQ value) plus one, the ACK packet may be determined to be a legitimate packet. In this way, the load-balancing device may encrypt the quaternary information of the ACK packet according to the same encryption algorithm and obtain the corresponding encryption result (which can be called the target ACK value). Then, the load-balancing device may determine whether the ACK value, the target ACK value, and the target SEQ value in the ACK packet are consistent. If the ACK value in the ACK packet is consistent with the target SEQ value, that is, the ACK value in the ACK packet is the same as the target SEQ value plus one, and the target SEQ value is consistent with the target ACK value, the load-balancing device can determine the ACK value, the target ACK value, and target SEQ value in the ACK packet are consistent. If the ACK value in the ACK packet is not the same as the value of the target SEQ value plus one, or the target SEQ value is not the same as the target ACK value, the load-balancing device can determine that the ACK value, the target ACK value, and the target SEQ value in the ACK packet are inconsistent. Specifically, the load-balancing device may first determine whether the ACK value in the ACK packet is consistent with the target SEQ value. If the ACK value in the ACK packet is consistent with the target SEQ value, the load-balancing device may continue to determine whether the target SEQ value is consistent with the target ACK values. In the above embodiments where the target SEQ values are generated through separate encryption, it can be determined whether the target SEQ value is consistent with the target ACK value by determining whether the first encrypted value is the same as the target ACK value.

Correspondingly, if the ACK value in the ACK packet is consistent with the target SEQ value, and the target SEQ value is consistent with the target ACK value, the load-balancing device can determine that the ACK packet is a legitimate packet. If the ACK value in the ACK packet does not match the target SEQ value, or the target SEQ value does not match the target ACK value, the load-balancing device can determine that the ACK packet is an illegitimate packet.

Step 204: if the ACK packet is legitimate, marking a preset field in a subsequent PUSH_ACK packet, and forwarding the PUSH_ACK packet to service servers, such that the service servers process the target request based on the PUSH_ACK packet where the preset field is marked.

In one embodiment, the load-balancing device and the service server may in advance agree that: when the target request's ACK packet is legitimate, that is, the target request belongs to a normal network access request, the load-balancing device may specially label the target request's PUSH_ACK packet (a next packet following the ACK packet), for example, may set some custom fields (which can be called preset fields) in the PUSH_ACK packet to preset values such as the value of 1010101 in hexadecimal, to make the service servers obtain the content of the TCP_OPTION option based on the target SEQ value carried in the PUSH_ACK packet with special marks. In this way, if the load-balancing device judges that the ACK packet is illegitimate, it can perform discard processing. If the load-balancing device judges the above ACK packet is illegitimate, it can mark the preset fields in PUSH_ACK in the subsequent PUSH_ACK packet, and then modify the MAC address of the marked PUSH_ACK packet to the MAC address of the machine room where the service server is located based on the DR mode. Correspondingly, the marked PUSH_ACK packet may be forwarded to the service servers. After that, the service servers can receive the PUSH_ACK packet where the preset fields are marked, and then can obtain the content of the TCP_OPTION option from the PUSH_ACK packet according to the agreed content and complete the TCP connection processing with the client. Subsequently, the load-balancing device may directly forward subsequent packets of the target request to the above-mentioned service servers through the DR mode, so that the service servers can process the target request sent by the client.

It should be noted that, to further improve the security, the load-balancing device may also judge the validity of the above PUSH_ACK packet, and the judgment method may refer to the legitimate judgment method of the ACK packet, which is not described again here.

Optionally, the preset fields in the PUSH_ACK packet may be marked according to different protocol types. Correspondingly, a portion of Step 204 may include that: when the protocol type of the PUSH_ACK packet is ipv4, an ipv4 preset field in the PUSH_ACK packet may be marked; and when the protocol type of the PUSH_ACK packet is ipv6, an ipv6 preset field in the PUSH_ACK packet may be marked.

In one embodiment, when the protocol types of packets are different, the packet fields included in the packets may be also different. For example, under the ipv6 protocol, the packet may include a customized traffic class field, which is not available in the ipv4 protocol. In this way, after determining that the ACK packet is legitimate, the load-balancing device may determine the packet fields to be marked based on the protocol type of the PUSH_ACK packet. Specifically, if the protocol type of the PUSH_ACK packet is ipv4, the load-balancing device may mark the ipv4 preset field of the PUSH_ACK packet, for example, mark the tos field. If the protocol type of the PUSH_ACK packet is ipv6, the load-balancing device may mark the ipv6 preset field of the PUSH_ACK packet, for example, mark the traffic class field. It should be noted that the marked fields selected under the foregoing different protocol types may also be other fields, which are not limited here.

Optionally, the service servers may acquire the content of the TCP_OPTION option according to the ACK value in the PUSH_ ACK packet with the marked preset fields. The corresponding process may include: the service servers extract the ACK value in the PUSH_ACK packet with the marked preset fields and then get the target SEQ value according to the extracted ACK value; and the service servers decrypt the target SEQ value to obtain the content of the TCP_OPTION option, and process the target request based on the content of the TCP_OPTION option.

In one embodiment, because the target SEQ value holds the content of the TCP_OPTION option necessary to establish a TCP connection in disguise, and the ACK value in the PUSH_ACK packet is the same as the ACK value in the ACK packet, the service servers may use the ACK value in the PUSH ACK packet to infer the target SEQ value, and then the target SEQ value may be decrypted to obtain the content of the TCP_OPTION option. Specifically, after receiving the PUSH_ACK packet with the marked preset fields, the service servers may extract the ACK value from the PUSH_ACK packet, and then obtain the target SEQ value based on the extracted ACK value, that is, the ACK value is subtracted by one to get the target SEQ value. After that, the service servers may decrypt the target SEQ value according to the decryption algorithm corresponding to the above encryption algorithm to obtain the content of the TCP_OPTION option. Subsequently, the service servers may process the TCP connection with the client based on the content of the TCP_OPTION option, to process the target request.

Optionally, processing the target request based on the content of the TCP_OPTION option may include: if a connection of the target request is established, updating connection entry of the target request based on the content of the TCP_OPTION option and processing the target request based on the updated connection entry; if the connection of the target request is not established, creating a connection entry based on the content of the TCP_OPTION option and processing the target request based on the created connection entry.

In one embodiment, if the service servers have established a TCP connection with the client, the connection entry may be updated based on the content of the TCP_OPTION option. Specifically, the session time of the TCP connection in the connection entry may be updated based on the content of the TCP_OPTION option, or a reset message may be generated and sent based on the content of the TCP_OPTION option to update the connection entry. After that, the target request may continue to be processed based on the updated connection entry. If a TCP connection is not established between the service servers and the client, a connection entry may be created based on the content of the TCP _OPTION option, and then a TCP connection with the client may be established based on the created connection entry to process the target request.

In the present disclosure, when receiving the data packet of the target request, the packet type of the data packet may be determined. If the packet type is an SYN packet, the SYN_ACK packet carrying the target SEQ value may be replied. If the packet type is an ACK message, whether the ACK message is legitimate may be determined based on the target SEQ value. If the ACK message is legitimate, the preset fields in a subsequent PUSH_ACK message may be marked, and the PUSH_ACK may be forwarded to a service server, to make the service server process the target request based on the PUSH_ACK message with the marked preset fields. In this way, in the DR working mode, when the load-balancing device receives the SYN message, forwarding the potentially aggressive SYN message directly to the back-end service server may be avoided by returning the SYN_ACK message carrying the target SEQ value. The problem of large consumption of business server resources may be alleviated. When the load-balancing device receives an illegitimate ACK packet, it may discard it to protect against the SYN FLOOD attacks, and the protection quality may be high. When the load-balancing device receives a legitimate ACK message, it may continue the process for establishing the TCP connection with a low delay. The problems including the first packet delay or the prone to false protection caused by discard/retransmission of the first packet or the erroneous sequence number message may be avoided effectively. The customer experience and the service quality of the load-balancing equipment may be improved effectively. In addition, with the protection method provided by the embodiments of the present disclosure, no additional protection equipment may be needed, and the implementation cost may be reduced.

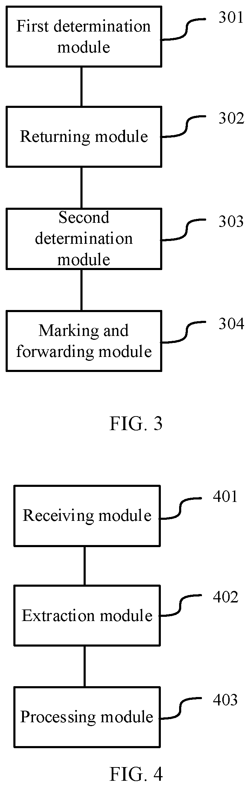

The present disclosure also provides a protection device in the DR mode based on the same technical solutions. As illustrated in FIG. 3, the device may include:
a first determination module 301, configured to determine a type of a data packet when receiving the data packet of a target request;
a returning module 302, configured to return an SYN_ACK packet carrying a target SEQ value if the packet type is an SYN packet;
a second determination module 302, configured to when the packet type is an ACK packet, determine whether the ACK packet is legitimate; and
a marking and forwarding module 304, configured to marking a preset field in a subsequent PUSH_ACK packet if the ACK packet is legitimate, and forwarding the PUSH_ACK packet to service servers to make the service servers process the target request based on the PUSH_ACK packet with the marked preset field.

Optionally, the returning module 302 may be configured to:
encrypt the packet content of the SYN packet to generate a target SEQ value if the packet type is an SYN packet, and to return the SYN_ACK packet carrying the target SEQ value.

Optionally, the second determination module 303 may be configured to:
if the packet type is an ACK packet, encrypt the packet content of the ACK packet to generate a target ACK value and determine whether the ACK value in the ACK packet, the target ACK value and the target SEQ value are consistent, where the packet content of the ACK packet may at least include quaternary information; and
if the ACK value in the ACK packet, the target ACK value and the target SEQ value are consistent, the ACK packet may be determined is illegitimate; and if the ACK value in the ACK packet, the target ACK value, and the target SEQ value are inconsistent, the ACK packet may be determined is illegitimate.

Optionally, the second determination module 303 may be further configured to:
if the ACK value in the ACK packet is same as the target SEQ value plus one, and the target SEQ value is consistent with the target ACK value, determine the ACK value, the target ACK value, and target SEQ value in the ACK packet are consistent; otherwise determine that the ACK value, the target ACK value, and the target SEQ value in the ACK packet are inconsistent.

Optionally, the marking and forwarding module 304 may be configured to:
when the protocol type of the PUSH_ACK packet is ipv4, mark an ipv4 preset field in the PUSH_ACK packet; and
when the protocol type of the PUSH_ACK packet is ipv6, mark an ipv6 preset field in the PUSH_ACK packet.

It should be noted that, when the protection device in the DR mode provided by above embodiments of the present disclosure performs protection, the division of the functional module in the above embodiments is used as an example to illustrate the present disclosure. In actual application, the above functions may be allocated to different functional modules. That is, an internal structure of the device may be divided into different functional modules to achieve all or a portion of the above functions.

The present disclosure also provides a service server based on the same technical solution. As illustrated in FIG. 4, the service server may include:
a receiving module 401, configured to receive a PUSH_ACK packet with marked preset field forwarded by the protection device;
an extraction module 402, configured to extract the ACK value in the PUSH_ACK packet with the marked preset field and then get the target SEQ value according to the extracted ACK value; and
a processing module 403 configured to decrypt the target SEQ value to obtain the content of the TCP_OPTION option, and process the target request including the PUSH_ACK packet with the marked preset field based on the content of the TCP_OPTION option.

Optionally, the processing module 403 may be configured to:
if a connection of the target request is established, update a connection entry of the target request based on the content of the TCP_OPTION option and process the target request based on the updated connection entry; and
if the connection of the target request is not established, create a connection entry based on the content of the TCP_OPTION option and process the target request based on the created connection entry.

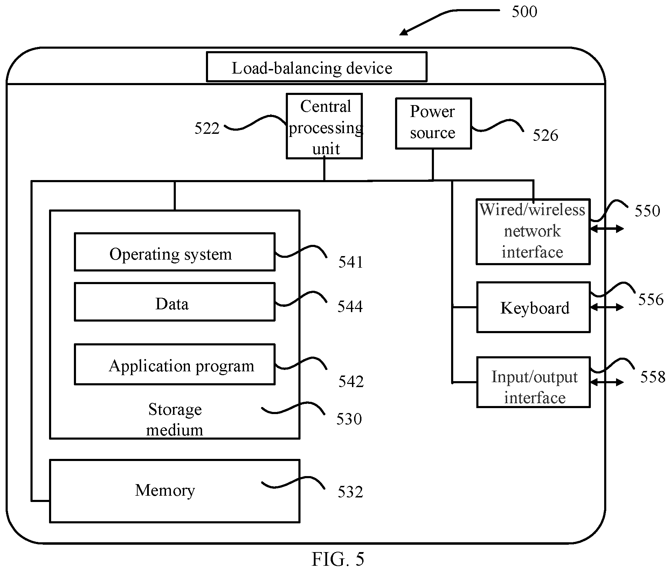

FIG. 5 illustrates a schematic structure of a load-balancing device provided by the present disclosure. As illustrated in FIG. 5, the load-balancing device 500 may be different according to different configurations or performance. The load-balancing device 500 may include one or more central processing units 522 (such as one or more processors), a memory 532, and one or more storage devices 530 for storing application programs 542 or data 544 (such as one or more massive storage devices). Among them, the memory 532 and the one or more storage devices 530 may be volatile storage or persistent storage. The programs stored in the one or more storage devices 530 may include one or more modules (not shown in the figures) and each module may include a series of instructions with respect to the load-balancing device. Further, the one or more central processing units 522 may be configured to communicate with the one or more storage devices 530 and execute the series of instructions of the one or more storage devices 530 on the load-balancing device 500.

The load-balancing device 500 may further include one or more power sources 526, one or more wired/wireless network interfaces 550, one or more input/output interfaces 558, one or more keyboards 556, and/or one or more operations systems 541 including Windows Server™, Mac OS X™, Unix™, Linux™, FreeBSD™, etc.

The load-balancing device 500 may include the memory and the one or more programs stored in the memory. The one or more programs may be configured to be executed by one or more processors to execute protection instructions in the DR mode.

Those skilled in the art may appreciate that the disclosed embodiments may be implemented partially or wholly by hardware or by using computer programs to instruct hardware. The computer programing may be stored in a computer-readable storage medium in a computer. The storage medium may refer to a read-only storage medium, a magnetic disk, or an optical disk.

The foregoing are merely certain exemplary embodiments of the present disclosure and are not intended to limit the present disclosure. Without departing from the spirit and principles of the present disclosure, any modifications, equivalent substitutions, and improvements, etc. shall fall within the scope of the present disclosure.

## Claims

1. A protection method under a direct routing mode, comprising:
when receiving a data packet of a target request, determining a packet type of the data packet;
if the packet type is an SYN packet, returning an SYN_ACK packet carrying a target SEQ value;
if the packet type is an ACK packet, determining whether the ACK packet is legitimate based on the target SEQ value; and
if the ACK packet is legitimate, marking a preset field in a subsequent PUSH_ACK packet and forwarding the PUSH_ACK packet to a service server, such that the service server processes the target request based on the PUSH_ACK packet with the marked preset field.

2. The method according to claim 1, wherein if the packet type is the SYN packet, returning the SYN_ACK packet carrying the target SEQ value, includes:
if the packet type is the SYN packet, encrypting packet content of the SYN packet to generate the target SEQ value, and returning the SYN_ACK packet carrying the target SEQ value, wherein:
the packet content of the SYN packet at least includes quaternary information and content of a TCP_OPTION option.

3. The method according to claim 1, wherein if the packet type is the ACK packet,
determining whether the ACK packet is legitimate based on the target SEQ value, includes:
if the packet type is the ACK packet, encrypting packet content of the ACK packet to generate a target ACK value and determining whether an ACK value in the ACK packet, the target ACK value, and the target SEQ value are consistent, wherein the packet content of the ACK packet at least includes quaternary information; and
if being consistent, determining the ACK packet is illegitimate; otherwise, determining the ACK packet is illegitimate.

4. The method according to claim 3, wherein determining whether the ACK value in the ACK packet, the target ACK value and the target SEQ value are consistent, includes:
if the ACK value in the ACK packet is same as the target SEQ value plus one and the target SEQ value is consistent with the target ACK value, determining that the ACK value, the target ACK value, and target SEQ value in the ACK packet are consistent; otherwise, determining that the ACK value, the target ACK value, and target SEQ value in the ACK packet are inconsistent.

5. The method according to claim 1, wherein marking the preset field in the subsequent PUSH_ACK packet includes:
if a protocol type of the PUSH_ACK packet is ipv4, marking an ipv4 preset field in the PUSH_ACK packet; and
if a protocol type of the PUSH_ACK packet is ipv6, marking an ipv6 preset field in the PUSH_ACK packet.

6. A protection method under a direct routing mode, comprising:
receiving a PUSH_ACK packet with a marked preset field;
extracting an ACK value in the PUSH_ACK packet with the marked preset field and acquiring a target SEQ value based on the extracted ACK value; and
decrypting the target SEQ value to obtain content of a TCP_OPTION option and processing a target request to which the PUSH_ACK packet with the marked preset field belongs based on the content of the TCP_OPTION option.

7. The method according to claim 6, wherein processing the target request which the PUSH_ACK packet with the marked preset field belongs based on the content of the TCP_OPTION option includes:
if a connection of the target request is established, updating connection entry of the target request based on the content of the TCP_OPTION option and processing the target request based on the updated connection entry; and
if the connection of the target request is not established, creating a connection entry based on the content of the TCP_OPTION option and processing the target request based on the created connection entry.

8. A protection device under a direct routing mode, comprising:
a first determination module, configured to determine a type of a data packet when receiving the data packet of a target request;
a returning module, configured to return an SYN_ACK packet carrying a target SEQ value if the packet type is an SYN packet;
a second determination module, configured to if the packet type is an ACK packet, determine whether the ACK packet is legitimate; and
a marking and forwarding module, configured to mark a preset field in a subsequent PUSH_ACK packet if the ACK packet is legitimate, and forward the PUSH_ACK packet to service servers such that the service servers process the target request based on the PUSH_ACK packet with the marked preset field.

9. The device according to claim 8, wherein the returning module is configured to:
if the packet type is an SYN packet, encrypt a packet content of the SYN packet to generate a target SEQ value, and return the SYN_ACK packet carrying the target SEQ value, wherein the packet content of the SYN packet at least includes quaternary information and content of a TCP_OPTION option.

10. The device according to claim 8, wherein the second determination module is configured to:
if the packet type is an ACK packet, encrypt the packet content of the ACK packet to generate a target ACK value and determine whether an ACK value in the ACK packet, the target ACK value, and the target SEQ value are consistent, wherein the packet content of the ACK packet at least includes quaternary information; and
if the ACK value in the ACK packet, the target ACK value, and the target SEQ value are consistent, determine the ACK packet is illegitimate; otherwise, determine the ACK packet is illegitimate.

11. The device according to claim 10, wherein the second determination module is further configured to:
if the ACK value in the ACK packet is same as the target SEQ value plus one and the target SEQ value is consistent with the target ACK value, determine that the ACK value, the target ACK value, and target SEQ value in the ACK packet are consistent; otherwise, determine that the ACK value, the target ACK value, and target SEQ value in the ACK packet are inconsistent.

12. The device according to claim 8, wherein the marking and forwarding module is configured to:
if a protocol type of the PUSH_ACK packet is ipv4, mark an ipv4 preset field in the PUSH_ACK packet; and
if a protocol type of the PUSH_ACK packet is ipv6, mark an ipv6 preset field in the PUSH_ACK packet.

13. A service server, comprising:
a receiving module, configured to receive a PUSH_ACK packet with a marked preset field forwarded by the protection device;
an extraction module, configured to extract an ACK value in the PUSH_ACK packet with the marked preset field and then obtain a target SEQ value according to the extracted ACK value; and
a processing module, configured to decrypt the target SEQ value to obtain content of a TCP_OPTION option, and process a target request to which the PUSH_ACK packet with the marked preset field belongs based on the content of the TCP_OPTION option.

14. The service server according to claim 13, wherein the processing module is configured to:
if a connection of the target request is established, update a connection entry of the target request based on the content of the TCP_OPTION option and process the target request based on the updated connection entry; and
if the connection of the target request is not established, create a connection entry of the target request based on the content of the TCP_OPTION option and process the target request based on the created connection entry.

15. A load-balancing device, comprising a processor and a memory, wherein:
the memory is configured to store at least one instruction, at least one program, a set of codes, or a set of instructions; and
the at least one instruction, the at least one program, the set of codes, or the set of instructions is configured to be loaded and executed by the processor, to implement a protection method under a direct routing mode according to any one of claims 1-5.

16. A computer-readable storage medium, configured to store at least one instruction, at least one program, a set of codes, or a set of instructions, wherein:
the at least one instruction, the at least one program, the set of codes, or the set of instructions is configured to be loaded and executed by a processor, to implement a protection method under a direct routing mode according to any one of claims 1-7.
